# EUROPÄISCHE PATENTSCHRIFT

(11) **EP 2 850 605 B1**
(45) Veröffentlichungstag und Bekanntmachung des Hinweises auf die Patenterteilung: **05.12.2018**
(21) Anmeldenummer: 13721339.3
(22) Anmeldetag: 06.05.2013
(51) Int. Cl.: G08G 1/00, B60W 30/165, G05D 1/02, H04W 12/10

(54) **VERFAHREN UND SYSTEM ZUM AUTONOMEN NACHFÜHREN EINES FOLGEFAHRZEUGS AUF DER SPUR EINES LEITFAHRZEUGS**
METHOD AND SYSTEM FOR AUTONOMOUS TRACKING OF A FOLLOWING VEHICLE ON THE TRACK OF A LEADING VEHICLE
PROCÉDÉ ET SYSTÈME PERMETTANT DE FAIRE SUIVRE, DE MANIÈRE AUTONOME, UN VÉHICULE SUIVEUR SUR LA VOIE D'UN VÉHICULE DE GUIDAGE

(30) Priorität: 16.05.2012 DE 102012208256
(43) Veröffentlichungstag der Anmeldung: 25.03.2015
(73) Patentinhaber: Continental Teves AG & Co. OHG, 60488 Frankfurt am Main (DE)
(72) Erfinder: MEHR, Wilfried, A-6960 Wolfurt (AT); STÄHLIN, Ulrich, 65760 Eschborn (DE); LÜKE, Stefan, 57462 Olpe (DE)
(86) Internationale Anmeldenummer: PCT/EP2013/059398
(87) Internationale Veröffentlichungsnummer: WO 2013/171089

(56) Entgegenhaltungen:
- DE-A1- 19 843 666
- DE-B3-102008 022 046
- US-A1- 2007 083 318
- US-A1- 2010 256 835
- YAN G ET AL: "Providing VANET security through active position detection", COMPUTER COMMUNICATIONS, ELSEVIER SCIENCE PUBLISHERS BV, AMSTERDAM, NL, Bd. 31, Nr. 12, 30. Juli 2008 (2008-07-30) , Seiten 2883-2897, XP022849885, ISSN: 0140-3664, DOI: 10.1016/J.COMCOM.2008.01.009 [gefunden am 2008-01-26]
- Norbert Bißmeyer ET AL: "Angriffserkennung in der Car-to-X Kommunikation basierend auf Bewegungsinformationen", Automotive security. 27. VDI/VW-Gemeinschaftstagung 2011, 11. Oktober 2011 (2011-10-11), Seiten 81-94, XP055072940, Düsseldorf ISBN: 978-3-18-092131-0 Gefunden im Internet: URL:http://sit.sit.fraunhofer.de/mne/publi cations/download/Bissmeyer_2011_2.pdf [gefunden am 2013-07-25]

## Beschreibung

Die Erfindung betrifft ein Verfahren zum autonomen Nachführen eines Folgefahrzeugs auf der Spur eines Leitfahrzeugs gemäß Oberbegriff von Anspruch 1 und ein System zum autonomen Nachführen eines Folgefahrzeugs auf der Spur eines Leitfahrzeugs gemäß Oberbegriff von Anspruch 12. Im Stand der Technik ist bereits eine Vielzahl unterschiedlicher Sensorsysteme zur Umfelderfassung bekannt. Mittels dieser Sensorsysteme ist es beispielsweise möglich, Spurbegrenzungen zu erkennen oder den Abstand zu einem Vorausfahrzeug und somit eine Relativposition des Vorausfahrzeugs zu bestimmen. Auch eine Relativgeschwindigkeit zum Vorausfahrzeug kann mittels der bekannten Sensorsysteme bestimmt werden. Ebenso ist es bereits bekannt, über drahtlos kommunizierende Fahrzeug-zu-X-Kommunikationssysteme Informationen mit Umgebungsfahrzeugen oder Infrastruktureinrichtungen auszutauschen. Die von den Fahrzeugen versendeten Fahrzeug-zu-X-Botschaften umfassen üblicherweise zumindest eine Absolutposition, eine Absolutgeschwindigkeit und eine Information über die Fahrtrichtung.
In diesem Zusammenhang offenbart die DE 10 2006 050 214 A1 ein Fahrspurerkennungsverfahren zum Unterstützen eines Fahrers beim Fahren mit einem Fahrzeug. Dabei wird zunächst eine Fahrbahnranderkennung z.B. mittels Infrarotsensoren, Kamera und Radarscannern vorgenommen. Anhand der Auswertung der Sensorsignale nach Merkmalen, die die oberflächliche Beschaffenheit der Straße und des Straßenrands repräsentieren, erfolgt eine Erkennung eines Fahrspurwechsels. Wird nun erkannt, dass das Fahrzeug die Fahrspur verlässt, ohne dass der Blinker betätigt wurde, dann erfolgt ein Warnsignal an den Fahrer. Das Warnsignal kann optisch, akustisch oder haptisch sein.

Die DE 41 33 882 A1 beschreibt ein Verfahren zum selbsttätigen Nachführen eines Fahrzeugs auf der Spur eines vorausfahrenden Fahrzeugs. Das nachfolgende Fahrzeug umfasst dabei eine elektronische Kamera, welche laufend Bildsignale für signifikante Heckbereiche des Führungsfahrzeugs erzeugt. Durch elektronische Bildauswertung der Bildsignale wird ebenfalls laufend der Abstand zum Führungsfahrzeug sowie der Seitenversatz des Führungsfahrzeugs zur Längsachse des eigenen Fahrzeugs ermittelt. Anhand dieser Informationen wiederum wird der Lenkwinkel errechnet, welcher erforderlich ist, um dem Führungsfahrzeug zu folgen. Der errechnete Lenkwinkel wird von einem mit der Lenkwelle des Fahrzeugs verbundenen Schrittmotor eingestellt, ohne dass der Fahrer eingreifen muss. Eine Abstandsregelung wird in der DE 41 33 882 A1 nicht beschrieben.

In der DE 10 2007 024 877 A1 wird ein Verfahren zur Bildung und Steuerung eines Fahrzeugverbandes offenbart. Dazu werden Fahrzeugidentifikationsdaten von verschiedenen Fahrzeugen mittels Fahrzeug-zu-Fahrzeug-Kommunikation untereinander übermittelt. Ein erstes Fahrzeug initiiert nun durch Aussenden einer Initiierungsnachricht die Bildung des Fahrzeugverbands. Umgebungsfahrzeuge reagieren auf den Empfang der Initiierungsnachricht mit dem Senden einer Akzeptanz- oder einer Ablehnungsnachricht. Sofern eine Ablehnungsnachricht gesendet wird, schließt sich das sendende Fahrzeug dem Verband nicht an. Im Falle des Sendens einer Akzeptanznachricht muss nun das erste Fahrzeug seinerseits die Aufnahme in den Fahrzeugverband mit dem Senden einer weiteren Akzeptanznachricht bestätigen. Sofern das erste Fahrzeug hingegen eine Ablehnungsnachricht sendet, wird das weitere Fahrzeug nicht in den Verband aufgenommen. Sobald ein Verband aus zwei oder mehr Fahrzeugen gebildet wurde, erfolgt eine Abstimmung der zukünftig geplanten Fahrbewegungen mittels Fahrzeug-zu-Fahrzeug-Kommunikation. Dabei werden zukünftig geplante Fahrbewegungen des ersten Fahrzeugs des Fahrzeugverbands datentechnisch erfasst und an die weiteren Fahrzeuge übertragen. Auf Basis der empfangenen Daten planen die weiteren Fahrzeuge eine angemessene eigene Fahrbewegung.

Nachteilig bei den aus dem Stand der Technik bekannten Verfahren ist es, dass die einem Folgefahrzeug zur Verfügung stehenden Informationen wegen der hohen Sicherheitsanforderungen im Straßenverkehr nicht nur eine sehr große Zuverlässigkeit aufweisen müssen sondern auch mit sehr großer Zuverlässigkeit übertragen bzw. von einem Folgefahrzeug erfasst werden müssen, ohne dass im Stand der Technik jedoch eine Lösung zum Erreichen dieser Voraussetzung offenbart wird. Das Fehlen der zum autonomen Fahren notwendigen Informationen oder das Erfassen von falschen Informationen bzw. das falsche Erfassen von korrekten Informationen kann zu schwerwiegenden Unfällen führen. Wegen dieses hohen Gefährdungspotentials und der daraus erwachsenden Anforderungen an die Zuverlässigkeit derartiger Verfahren war es bisher nicht möglich, eine autonome Folgefahrt eines oder mehrerer Fahrzeuge im öffentlichen Straßenverkehr abseits von streng überwachten Versuchsdurchführungen zu realisieren.

Die US 2010/0256835 A1 offenbart ein Verfahren zum Steuern von mehreren Fahrzeugen, um die mehreren Fahrzeuge in einer Kolonne zu betreiben, wobei das Verfahren auf den Aspekt der Kraftstoffreduzierung fokussiert und diese durch eine Optimierung der Abstände zwischen den Fahrzeugen erreicht.

Ferner offenbart der Fachartikel
YAN G ET AL: "Providing VANET security through active position detection", COMPUTER COMMUNICATIONS, ELSEVIER SCIENCE PUBLISHERS BV, AMSTERDAM, NL, Bd. 31, Nr. 12, 30. Juli 2008 (2008-07-30), Seiten 2883-2897, XP022849885, ISSN: 0140-3664, 001: 10.1016 / J.COMCOM.2008.01.009
eine Möglichkeit in einem VANET (Vehicular Ad hoch Network) Nachrichten mit einer invaliden Position mittels eines Radars zu erkennen.

Der Erfindung liegt daher die Aufgabe zugrunde, ein Verfahren vorzuschlagen, welches eine autonome Folgefahrt eines oder mehrerer Fahrzeuge im Straßenverkehr ermöglicht und dabei den hohen Sicherheitsanforderungen in diesem Zusammenhang gerecht wird.

Diese Aufgabe wird erfindungsgemäß durch das Verfahren zum autonomen Nachführen eines Folgefahrzeugs auf der Spur eines Leitfahrzeugs gemäß Anspruch 1 gelöst.

Gemäß dem erfindungsgemäßen Verfahren zum autonomen Nachführen eines Folgefahrzeugs auf der Spur eines Leitfahrzeugs, bei welchem das Leitfahrzeug von einem Fahrer gesteuert wird, wird vom Leitfahrzeug mittels Fahrzeug-zu-X-Kommunikation eine Leitbotschaft gesendet, welche die Bereitschaft zum autonomen Nachführen von Folgefahrzeugen signalisiert und mindestens eine Fahrzeugidentifikationsinformation und eine Routeninformation des Leitfahrzeugs umfasst. Die Leitbotschaft wird vom Folgefahrzeug mittels Fahrzeug-zu-X-Kommunikation empfangen und von diesem abgelehnt oder mit einer Folgebotschaft, welche zumindest eine Fahrzeugidentifikationsinformation des Folgefahrzeugs umfasst, bestätigt. Nach einem Empfang der Folgebotschaft werden vom Leitfahrzeug bis zu einem Ende des autonomen Nachführens mittels Fahrzeug-zu-X-Kommunikation erste Koordinationsinformationen zur Koordination des autonomen Nachführens an das Folgefahrzeug gesendet. Das Verfahren zeichnet sich dadurch aus, dass zweite Koordinationsinformationen zur Koordination des autonomen Nachführens mittels Umfeldsensoren des Folgefahrzeugs auf Basis von Fahrbewegungen des Leitfahrzeugs erfasst werden, wobei die ersten und die zweiten Koordinationsinformationen vom Folgefahrzeug abgeglichen werden, wobei bei übereinstimmendem Abgleichsergebnis das den ersten und zweiten Koordinationsinformationen entsprechende autonome Nachführen ausgeführt wird und wobei bei abweichendem Abgleichsergebnis das autonome Nachführen beendet wird.

Durch das Senden der Leitbotschaft bietet das Leitfahrzeug anderen Fahrzeugen in seiner direkten Umgebung unmittelbar die Möglichkeit an, dem Leitfahrzeug autonom nachgeführt zu werden. Das Senden der Leitbotschaft kann dabei vom Fahrer des Leitfahrzeugs initiiert werden, so dass dieser selbst entscheiden kann, ob er sein Fahrzeug als Leitfahrzeug bereitstellt. Da das Leitfahrzeug u.U. in einem vergleichsweise zurückhaltenden und gleichmäßigen Fahrstil fahren muss, um ein oder mehrere Folgefahrzeuge sicher und komfortabel nachzuführen, kann es vorkommen, dass ein Fahrer sein Fahrzeug in bestimmten Situationen nicht als Leitfahrzeug bereitstellen möchte. Indem die Leitbotschaft mindestens eine Fahrzeugidentifikationsinformation und eine Routeninformation des Leitfahrzeugs umfasst, ergibt sich der Vorteil, dass der Fahrer eines Folgefahrzeugs zunächst eine Information darüber erhält, welches der Fahrzeuge in seiner Umgebung die Möglichkeit anbietet, ihm autonom nachgeführt zu werden.

Durch die ebenfalls umfasste Routeninformation ergibt sich der weitere Vorteil, dass der Fahrer des Folgefahrzeugs darüber entscheiden kann, ob das Fahrzeug, welches die Leitinformation sendet, für ihn als Leitfahrzeug infrage kommt oder aufgrund stark divergierender Fahrziele als Leitfahrzeug für ihn ungeeignet scheint. Das Senden der Folgebotschaft durch das Folgefahrzeug führt zu dem Vorteil, dass das Leitfahrzeug eine Information erhält, dass ihm ein Folgefahrzeug autonom nachgeführt werden möchte. Da die Folgebotschaft auch eine Fahrzeugidentifikationsinformation des Folgefahrzeugs umfasst, erhält der Fahrer des Leitfahrzeugs zusätzlich eine Information darüber, welches der Fahrzeuge in seiner Umgebung ihm nachgeführt werden möchte. Somit ergibt sich der Vorteil, dass der Fahrer des Leitfahrzeugs die Möglichkeit erhält, das die Folgebotschaft sendende Fahrzeug als Folgefahrzeug abzulehnen. In diesem Fall kann entweder eine Ablehnungsbotschaft an das Folgefahrzeug gesendet werden oder das Senden der ersten Koordinationsinformationen kann ausbleiben. In letzterem Falle wird der Folgewunsch des Folgefahrzeugs also einfach ignoriert.

Auf Wunsch des Fahrers des Leitfahrzeugs kann die Leitbotschaft in regelmäßigen Intervallen, z.B. alle 5 s, gesendet werden. Auch ein einmaliges Senden der Leitbotschaft auf eine Initiierung des Fahrers des Leitfahrzeugs hin ist möglich.

Die Fahrzeugidentifikationsinformation kann dabei als anonymisiertes Pseudonym in Verbindung mit einer Ortsangabe ausgestaltet sein, ebenso aber auch als Beschreibung des Erscheinungsbilds des sendenden Fahrzeugs (z.B. Marke, Typ, Farbe) oder als Angabe des amtlichen Kennzeichens des sendenden Fahrzeugs. Auch Kombinationen dieser Ausgestaltungsmöglichkeiten sind möglich.

Wenn der Fahrer des Folgefahrzeugs das autonome Nachführen beenden möchte, z.B. weil er sein Ziel erreicht hat oder weil die ihm bekannte Fahrtroute des Leitfahrzeugs ab einem bestimmten Punkt von der geplanten Fahrtroute des Folgefahrzeugs abweicht und dieser Punkt erreicht wurde, kann er jederzeit selbst wieder die vollständige Kontrolle über das Folgefahrzeug übernehmen. Dies kann z.B. mittels einer geeigneten Eingabevorrichtung wie einem Taster geschehen, durch dessen Betätigung das Folgefahrzeug das autonome Nachführen beendet. Ebenso kann eine gewünschte Kontrollübernahme durch den Fahrer des Folgefahrzeugs mittels der Betätigung eines Pedals oder des Lenkrads signalisiert werden. Auch in diesem Fall kann vorgesehen sein, dass der Fahrer augenblicklich die volle Kontrolle über sein Fahrzeug zurück erhält. Somit ist außerdem sicher gestellt, dass der Fahrer jederzeit ein autonomes Fahrmanöver des Folgefahrzeugs korrigieren kann, sofern dies notwendig oder gewünscht ist. Beim Beenden des autonomen Nachführens durch das Folgefahrzeug kann dem Leitfahrzeug z.B. eine entsprechende Botschaft des Folgefahrzeugs gesendet werden, damit dieses darüber informiert ist, dass das Folgefahrzeug nicht länger autonom nachgeführt wird.

Umgekehrt hat vorteilhafterweise auch der Fahrer des Leitfahrzeugs die Möglichkeit, das autonome Nachführen zu beenden. In diesem Fall sendet das Leitfahrzeug eine entsprechende Botschaft an das Folgefahrzeug und das Folgefahrzeug gibt diese Information an den Fahrer des Folgefahrzeugs aus. Wichtig ist hierbei, dass das autonome Nachführen des Folgefahrzeugs nicht plötzlich und für den Fahrer des Folgefahrzeugs unerwartet beendet wird, sondern nach Möglichkeit erst mit einiger Zeitverzögerung, um dem Fahrer des Folgefahrzeugs Gelegenheit und Zeit zu geben, sich einen Überblick über die aktuelle Fahrsituation zu verschaffen und die Kontrolle über sein Fahrzeug zu übernehmen. Insbesondere kann es vorgesehen sein, dass in diesem Fall das autonome Nachführen erst dann beendet wird, wenn der Fahrer des Folgefahrzeugs die Bereitschaft zur Übernahme der Kontrolle z.B. mittels Betätigung eines Tasters angezeigt hat. Andernfalls würde das Risiko eines Verkehrsunfalls durch eine plötzliche und unvorbereitete Kontrollübergabe an den Fahrer des Folgefahrzeugs erhöht.

Insbesondere ergeben sich zudem Vorteile beim Einsatz des erfindungsgemäßen Verfahrens in LKWs, da diese in der Regel lange Strecken und mit weitestgehend gleichbleibender Geschwindigkeit fahren, wodurch ein sicheres und komfortables autonomes Nachführen vereinfacht wird. Während des autonomen Nachführens kann zudem der Sicherheitsabstand zwischen den einzelnen Fahrzeugen verkleinert werden, da das erfindungsgemäße Verfahren zu schnelleren Reaktionen in der Lage ist als ein menschlicher Fahrer. Der geringere Abstand zwischen den in der Kolonne fahrenden Fahrzeugen wiederum reduziert den Luftwiderstand für die Folgefahrzeuge, da diese den Windschatten des Leitfahrzeugs bzw. des vorausfahrenden Folgefahrzeugs ausnutzen können. Somit ergibt sich auch eine Reduktion des Kraftstoffverbrauchs.

Das erfindungsgemäße Verfahren bietet somit eine Reihe von Vorteilen, welche jeweils die Sicherheit und Zuverlässigkeit des autonomen Nachführens eines Folgefahrzeugs auf der Spur eines Leitfahrzeugs gegenüber bekannten gattungsgemäßen Verfahren verbessern. Ein wesentlicher Beitrag zur Verbesserung der Sicherheit wird besonders durch das redundante erfassen der Koordinationsinformationen geleistet.

Es ist außerdem möglich, das erfindungsgemäße Verfahren mit einem Geschäftsmodell zu verbinden. Beispielsweise kann der Fahrer eines Leitfahrzeugs das mittels der Leitbotschaft gesendete Angebot, andere Fahrzeuge autonom nachzuführen, mit der Entrichtung einer an ihn zu zahlenden Gebühr verbinden. Auch für Taxi-Unternehmen kann die Umsetzung des erfindungsgemäßen Verfahrens von Interesse sein, da die Taxi-Fahrzeuge als kommerzielle Leitfahrzeuge genutzt werden können. In diesem Fall haben die Kunden des Taxi-Unternehmens einerseits den Vorteil, nicht selbst fahren zu müssen, andererseits müssen sie aber auch nicht auf den Komfort des eigenen Fahrzeugs verzichten.

Bevorzugt ist es vorgesehen, dass die Fahrzeug-zu-X-Kommunikation zwischen dem Leitfahrzeug und dem Folgefahrzeug während des autonomen Nachführens über mindestens zwei unterschiedliche Kommunikationsmittel redundant erfolgt. Daraus ergibt sich der Vorteil, dass auch bei kurzfristig gestörter bzw. unterbrochener Verbindung eines Kommunikationsmittels für die Fahrzeug-zu-X-Kommunikation zwischen den beiden Fahrzeugen weiterhin die ersten Koordinationsinformationen gesendet und empfangen werden können. Somit erhöht sich die Robustheit des erfindungsgemäßen Verfahrens. Weiterhin können auch die redundant übertragenen ersten Koordinationsinformationen untereinander abgeglichen werden bzw. einzeln mit den zweiten Koordinationsinformationen abgeglichen werden. Bei nicht übereinstimmendem Abgleichsergebnis kann es insbesondere vorgesehen sein, das autonome Nachführen zu beenden. Dies trägt zur verbesserten Sicherheit des erfindungsgemäßen Verfahrens bei.

Weiterhin ist es bevorzugt, dass mittels der Umfeldsensoren des Folgefahrzeugs dritte Koordinationsinformationen auf Basis von Verkehrshinweisen und/oder vierte Koordinationsinformationen auf Basis von digitalem Kartenmaterial erfasst werden, wobei die dritten und/oder vierten Koordinationsinformationen mit den ersten und den zweiten Koordinationsinformationen abgeglichen werden, wobei bei übereinstimmendem Abgleichsergebnis das den ersten und zweiten und dritten und/oder vierten Koordinationsinformationen entsprechende autonome Nachführen ausgeführt wird und wobei bei abweichendem Abgleichsergebnis das autonome Nachführen beendet wird. Somit wird die Sicherheit und Zuverlässigkeit des erfindungsgemäßen Verfahrens weiter erhöht, da mit den dritten bzw. vierten Koordinationsinformationen zusätzliche Informationen zur Verfügung stehen, die bei nicht-übereinstimmendem Abgleichsergebnis das autonome Nachführen beenden. Es müssen also alle drei bzw. vier Koordinationsinformationen übereinstimmen, um das autonome Nachführen zu ermöglichen. Da die dritten Koordinationsinformationen Verkehrshinweise, wie z.B. Schilder, Ampeln, Spurbegrenzungen etc. umfassen, kann in der Regel nicht der volle Informationsinhalt der dritten Koordinationsinformationen mit dem Informationsinhalt der ersten oder zweiten Koordinationsinformationen abgeglichen werden. Erfindungsgemäß ist es daher insbesondere bevorzugt, dass auf ein übereinstimmendes Abgleichsergebnis erkannt wird, wenn kein Widerspruch zwischen den ersten bzw. zweiten Koordinationsinformationen und den dritten Koordinationsinformationen besteht. Das gleiche gilt für die vierten Koordinationsinformationen, deren Informationsinhalt in der Regel ebenfalls nicht vollständig mit den Informationsinhalten der ersten und zweiten und/oder dritten Koordinationsinformationen abgeglichen werden kann.

Die dritten Koordinationsinformationen werden insbesondere mit Umfeldsensoren wie z.B. Stereokamerasensoren oder Monokamerasensoren erfasst und die vierten Koordinationsinformationen werden insbesondere aus einem im Folgefahrzeug vorhandenen digitalen Speicher ausgelesen oder mittels einer kabellosen Datenverbindung von einem Server abgerufen.

Ein weiterer sich aus dem Erfassen der dritten bzw. vierten Koordinationsinformationen ergebender Vorteil ist, dass ein evtl. verkehrswidriges Verhalten des Leitfahrzeugs, wie z.B. überhöhte Geschwindigkeit in einem Straßenabschnitt mit Geschwindigkeitsbegrenzung, erkannt werden kann. In diesem Fall wird das autonome Nachführen vorteilhafterweise beendet.

Vorteilhafterweise ist es vorgesehen, dass die ersten Koordinationsinformationen absolute Positionsinformationen und absolute Geschwindigkeitsinformationen und absolute Lenkwinkelinformationen und absolute Ausrichtungsinformationen des Leitfahrzeugs umfassen und die zweiten Koordinationsinformationen relative Positionsinformationen und relative Geschwindigkeitsinformationen und relative Ausrichtungsinformationen des Leitfahrzeugs zum Folgefahrzeug umfassen. Über die bekannte, absolute Eigenposition können die absoluten Informationen in relative Informationen umgerechnet werden und umgekehrt. Besonders bevorzugt findet die Umrechnung der absoluten Informationen in relative Informationen bzw. umgekehrt vor dem Abgleichen der Koordinationsinformationen statt.

Die mittels Fahrzeug-zu-X-Kommunikation empfangenen ersten Koordinationsinformationen beschreiben die Spur und das ortsspezifische Fahrverhalten des Leitfahrzeugs. Die zweiten Koordinationsinformationen werden mittels geeigneter Umfeldsensoren und somit unabhängig von den ersten Koordinationsinformationen erfasst. Mittels des erfindungsgemäßen Abgleichs wird ermittelt, ob die ersten und die zweiten Koordinationsinformationen eine im Rahmen der Messungenauigkeit übereinstimmende Fahrspur des Leitfahrzeugs und ein im Rahmen der Messungenauigkeit übereinstimmendes ortsspezifisches Fahrverhalten des Leitfahrzeugs beschreiben. Sofern auf ein übereinstimmendes Abgleichsergebnis erkannt wird, wird das Folgefahrzeug dem Leitfahrzeug autonom nachgeführt. Andernfalls wird das autonome Nachführen beendet und die Kontrolle des Folgefahrzeugs wird an den Fahrer des Folgefahrzeugs übergeben.

In einer weiteren bevorzugten Ausführungsform ist es vorgesehen, dass das autonome Nachführen eine autonome Längs- und eine autonome Querregelung des Folgefahrzeugs gemäß dem übereinstimmenden Abgleichsergebnis der ersten und zweiten und/oder dritten und/oder vierten Koordinationsinformationen umfasst. Daraus ergibt sich der Vorteil, dass die Kontrolle des Fahrzeugs durch das erfindungsgemäße Verfahren vollständig übernommen wird und der Fahrer des Folgefahrzeugs weitestgehend von der Fahrzeugsteuerung entlastet wird.

Vorzugsweise zeichnet sich das Verfahren dadurch aus, dass mehr als nur ein einzelnes Folgefahrzeug autonom nachgeführt wird, wobei bei einem autonomen Nachführen von mehr als nur einem Folgefahrzeug die zweiten Koordinationsinformationen mittels der Umfeldsensoren des jeweiligen Folgefahrzeugs auf Basis der Fahrbewegung eines dem jeweiligen Folgefahrzeug vorausfahrenden Folgefahrzeugs erfasst werden. Somit ergibt sich der Vorteil, dass nicht für jedes einzelne Folgefahrzeug ein Leitfahrzeug gefunden werden muss, da ein einzelnes Leitfahrzeug eine Vielzahl von Folgefahrzeugen nachführen kann. Für den Fall, dass ein Folgefahrzeug nicht unmittelbar dem Leitfahrzeug folgt sondern einem vorausfahrenden Folgefahrzeug, erfolgt der Abgleich der ersten und der zweiten Koordinationsinformationen, indem die mittels Fahrzeug-zu-X-Informationen erfassten ersten Koordinationsinformationen des Leitfahrzeugs mit den mittels Umfeldsensoren erfassten zweiten Koordinationsinformationen auf Basis der Fahrbewegungen des unmittelbar vorausfahrenden Folgefahrzeugs abgeglichen werden. Die ersten Koordinationsinformationen können entweder unmittelbar vom Leitfahrzeug an alle Folgefahrzeuge gesendet werden oder aber über ein sog. "multi-hop"-Verfahren in der Kette der Folgefahrzeuge weitergeleitet werden. Wenn auf Übereinstimmung der ersten und der zweiten Koordinationsinformationen erkannt wird, kann davon ausgegangen werden, dass das vorausfahrende Folgefahrzeug bereits die ersten Koordinationsinformationen mit den zweiten, auf Basis der Fahrbewegungen dessen Vorausfahrzeugs erfassten Koordinationsinformationen abgeglichen hat und auf Übereinstimmung erkannt hat, da es den ersten Koordinationsinformationen folgt. Dieses Verfahren wird in der Kette der Folgefahrzeuge sukzessive von jedem Folgefahrzeug ausgeführt, so dass das erste Folgefahrzeug die zweite Koordinationsinformation unmittelbar auf Basis der Fahrbewegungen des Leitfahrzeugs erfasst.

Zweckmäßigerweise ist es vorgesehen, dass ein Fahrer des Folgefahrzeugs während des autonomen Nachführens vom Folgefahrzeug zur Vornahme einer manuellen Eingabe aufgefordert wird, wobei das autonome Nachführen beendet wird, wenn die manuelle Eingabe ausbleibt. Die manuelle Eingabe kann eine mehrmalige, zeitlich beabstandete Eingabe sein, welche in regelmäßigen oder zufälligen Abständen vorgenommen werden muss. Beispielsweise kann der Fahrer mittels einer optischen, haptischen oder akustischen Anzeige aufgefordert werden, innerhalb einer bestimmten Zeitspanne, z.B. 2 s, die Eingabe vorzunehmen. Ebenfalls denkbar ist eine permanente Eingabe während des gesamten Nachführens über einen sog. "Totmannschalter". Daraus ergibt sich der Vorteil, dass der Fahrer des Folgefahrzeugs sich notwendigerweise zumindest bis zu einem gewissen Grade weiterhin mit dem Fahrzeug beschäftigen muss und sich insbesondere bereithalten muss, die vollständige Fahrzeugkontrolle jederzeit wieder zu übernehmen. Beispielsweise ist es dem Fahrer somit nicht möglich, sich vollständig in eine andere Beschäftigung zu vertiefen. Dadurch wird die Sicherheit des gesamten Verfahrens erhöht, da der Fahrer des Folgefahrzeugs bei Problemen, Störungen oder dem Auftreten von unerwarteten bzw. kritischen Fahrsituationen die Kontrolle über das Folgefahrzeug vergleichsweise schnell übernehmen kann.

Bevorzugt ist es vorgesehen, dass eine zeitliche Dauer des autonomen Nachführens auf einen vorgegebenen Anteil eines vorgegebenen Zeitintervalls, insbesondere auf 50 Minuten je Stunde, begrenzt wird. Somit wird die Fahrzeugkontrolle in bestimmten Abständen immer wieder an den Fahrer des Folgefahrzeugs zurückgegeben, wodurch die Aufmerksamkeit des Fahrers weiterhin regelmäßig auf das Fahrgeschehen gelenkt wird, was ebenfalls zur Sicherheit des erfindungsgemäßen Verfahrens beiträgt. Der Fahrer kann sich dadurch bei einer plötzlichen Zurückgabe der Fahrzeugkontrolle vergleichsweise schnell in der dann gegebenen Fahrsituation zurechtfinden. Der vorgegebene Anteil des vorgegebenen Zeitintervalls kann ein zusammenhängender zeitlicher Block sein oder aber aufgeteilt sein in mehrere kürzere zeitliche Blöcke, welche durch Zeiten, in denen der Fahrer das Folgefahrzeug selbst steuert, voneinander getrennt sind. Die Summe der Zeiten der kürzeren Blöcke entspricht in diesem Fall dem vorgegebenen Anteil des vorgegebenen Zeitintervalls. Trotz der Unterbrechungen des autonomen Nachführens stellt sich für den Fahrer des Folgefahrzeugs eine deutliche Entlastung ein.

Außerdem ist es vorteilhaft, dass vom Folgefahrzeug mittels einer Sitzplatzbelegungserkennung überwacht wird, ob sich der Fahrer auf dem Fahrersitz befindet, wobei das autonome Nachführen beendet wird, wenn der Fahrer sich nicht auf dem Fahrersitz befindet. Daraus ergibt sich der Vorteil, dass das erfindungsgemäße Verfahren nur ausgeführt wird, solange der Fahrer den Fahrersitz nicht während der Fahrt verlässt und somit stets in der Position ist, die Fahrzeugkontrolle zu übernehmen, falls dies notwendig werden sollte. Dies trägt ebenfalls zur Sicherheit bei der Umsetzung des erfindungsgemäßen Verfahrens im Straßenverkehr bei. Die Sitzplatzbelegungserkennung kann z.B. mittels eines in den Fahrersitz integrierten Sensors oder einer in den Fahrgastraum gerichtete Kamera umgesetzt werden.

Weiterhin ist es vorgesehen, dass mittels der gesendeten Fahrzeugidentifikationsinformation des Folgefahrzeugs eine folgefahrzeugspezifische, strecken- und/oder zeitabhängige Vergütungsinformation erstellt wird. Aus diesem technischen Merkmal ergibt sich der Vorteil, dass das erfindungsgemäße Verfahren Einzug in kommerzielle Fahrdienstleistungen finden kann. Die Vergütung des Fahrers der Leitfahrzeugs bzw. des Dienstleisters, dem das Folgefahrzeug angehört, kann somit streckenabhängig bzw. zeitabhängig erfolgen.

Die vorliegende Erfindung betrifft weiterhin ein System zum autonomen Nachführen eines Folgefahrzeugs auf der Spur eines Leitfahrzeugs, welches insbesondere das erfindungsgemäße Verfahren ausführt. Das System umfasst zumindest ein von einem Fahrer gesteuertes Leitfahrzeug, ein Folgefahrzeug, Fahrzeug-zu-X-Kommunikationsmittel im Leitfahrzeug und im Folgefahrzeug zum Senden und Empfangen von Botschaften und Informationen, Fahrbewegungssensoren im Leitfahrzeug zum Bereitstellen von ersten Koordinationsinformationen, Koordinationsinformationsabgleichsmittel im Folgefahrzeug zum Abgleich unterschiedlicher Koordinationsinformationen sowie Umfeldsensoren im Folgefahrzeug und/oder einen eine digitale Karte enthaltenden Kartenspeicher im Folgefahrzeug. Das Leitfahrzeug sendet eine Leitbotschaft, welche die Bereitschaft zum autonomen Nachführen von Folgefahrzeugen signalisiert und mindestens eine Fahrzeugidentifikationsinformation und eine Routeninformation des Leitfahrzeugs umfasst, wobei das Folgefahrzeug die Leitbotschaft empfängt und diese ablehnt oder mit einer Folgebotschaft, welche zumindest eine Fahrzeugidentifikationsinformation des Folgefahrzeugs umfasst, bestätigt. Nach einem Empfang der Folgebotschaft bis zu einem Ende des autonomen Nachführens sendet das Leitfahrzeug die ersten Koordinationsinformationen zur Koordination des autonomen Nachführens an das Folgefahrzeug. Das erfindungsgemäße System zeichnet sich dadurch aus, dass die Umfeldsensoren des Folgefahrzeugs zweite Koordinationsinformationen zur Koordination des autonomen Nachführens auf Basis von Fahrbewegungen des Leitfahrzeugs erfassen, wobei die Koordinationsinformationsabgleichsmittel die ersten und die zweiten Koordinationsinformationen abgleichen, wobei das Folgefahrzeug bei übereinstimmendem Abgleichsergebnis das den ersten und zweiten Koordinationsinformationen entsprechende autonome Nachführen ausführt und wobei das Folgefahrzeug bei abweichendem Abgleichsergebnis das autonome Nachführen beendet. Da das erfindungsgemäße System alle zur Ausführung des erfindungsgemäßen Verfahrens notwendigen Mittel umfasst und insbesondere das erfindungsgemäße Verfahren ausführt, ergeben sich daraus die bereits beschriebenen Vorteile.

Bevorzugt ist es vorgesehen, dass die Umfeldsensoren ein oder mehrere Elemente aus der Gruppe
- Radarsensor,
- optischer Kamerasensor,
- Lidarsensor,
- Lasersensor und
- Ultraschallsensor
sind und
die Fahrzeug-zu-X-Kommunikationsmittel auf Basis einer oder mehrerer Verbindungsklassen aus der Gruppe
- WLAN-Verbindung, insbesondere nach IEEE 802.11,
- ISM-Verbindung (Industrial, Scientific, Medical Band),
- Bluetooth®-Verbindung,
- ZigBee-Verbindung,
- UWB-Verbindung (Ultra Wide Band),
- WiMax®-Verbindung (Worldwide Interoperability for Microwave Access),
- Infrarotverbindung,
- Mobilfunkverbindung und
- radarbasierter Kommunikation
Botschaften und/oder Informationen senden und/oder empfangen. Die genannten Umfeldsensoren sind dazu geeignet, Orts- und Bewegungsinformationen eines Vorausfahrzeugs zu erfassen und somit die zweiten Koordinationsinformationen zu erfassen. Die genannten Verbindungsarten bieten unterschiedliche Vorteile, je nach Art, Wellenlänge und verwendetem Datenprotokoll. So ermöglichen einige der genannten Verbindungsarten z.B. eine vergleichsweise hohe Datenübertragungsrate und einen vergleichsweise schnellen Verbindungsaufbau, andere hingegen eignen sich weitestgehend sehr gut zur Datenübertragung um Sichthindernisse herum. Durch die Kombination und gleichzeitige bzw. parallele Nutzung mehrerer dieser Verbindungsarten ergeben sich weitere Vorteile, da so auch Nachteile einzelner Verbindungsarten ausgeglichen werden können. Alle der genannten Verbindungsarten sind zur Übertragung der ersten Koordinationsinformationen geeignet. Die radarbasierte Kommunikation bietet dabei den besonderen Vorteil, dass sie speziell zur Übertragung von Informationen zwischen dem Folgefahrzeug und dem Leitfahrzeug genutzt werden kann, da ein vorhandener Radarsensor zur Abstandsbestimmung zwischen dem Folgefahrzeug und dem Leitfahrzeug während des Nachführens in der Regel ohnehin verwendet wird. In diesem Fall wird dem Radarsignal ein Kommunikationssignal aufmoduliert. Der Radarsensor kann somit während des autonomen Nachführens eine doppelte Funktion erfüllen.

Weitere bevorzugte Ausführungsformen ergeben sich aus den Unteransprüchen und der nachfolgenden Beschreibung eines Ausführungsbeispiels an Hand von Figuren.

Es zeigen
- Fig. 1: die Bildung eines Fahrzeugverbands bestehend aus einem Leitfahrzeug und zwei Folgefahrzeugen und
- Fig. 2: ein Flussdiagramm mit einem möglichen Ablauf des erfindungsgemäßen Verfahrens.

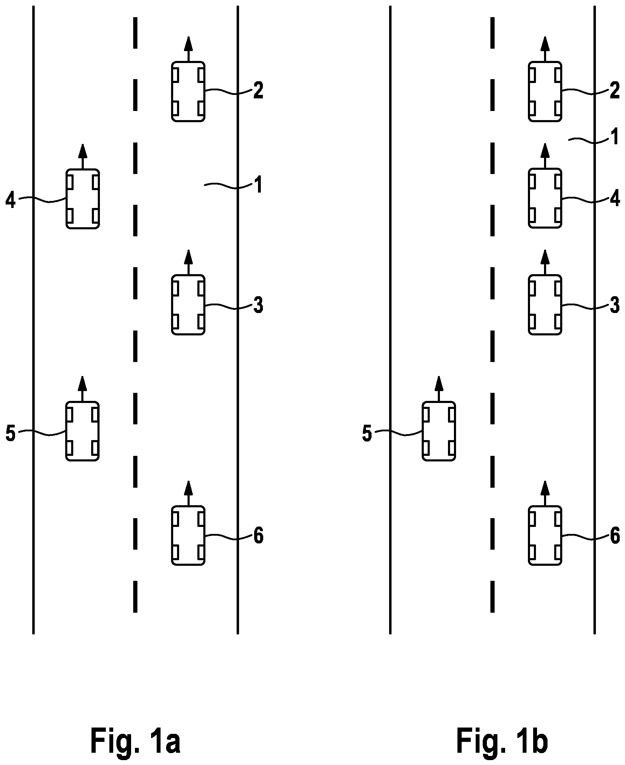

Fig. 1a zeigt zweispurige Straße 1, welche von Fahrzeugen 2, 3, 4, 5 und 6 befahren wird. Die an den Fahrzeugen angebrachten Pfeile geben die Fahrtrichtung wider. Fahrzeuge 2, 3, 4, 5 und 6 sind mit dem erfindungsgemäßen System zur Ausführung des erfindungsgemäßen Verfahrens ausgestattet. Der Fahrer von Fahrzeug 2 entscheidet sich, den in seiner Umgebung befindlichen Fahrzeugen die Möglichkeit zu bieten, ihm autonom nachgeführt zu werden. Dazu initiiert er das Senden einer Leitbotschaft mittels einer im Leitfahrzeug vorhandenen WLAN-Kommunikationseinheit. Die Leitbotschaft umfasst eine Fahrzeugidentifikationsinformation in Form einer Fahrzeugbeschreibung (Marke, Typ, Farbe und Ortsangabe) sowie eine im Navigationssystem von Fahrzeug 2 enthaltene Routeninformation. Die Leitbotschaft wird in regelmäßigen zeitlichen Abständen von 10 s gesendet. Fahrzeuge 3, 4, 5 und 6 empfangen die Leitbotschaft und zeigen sie mittels einer optischen Visualisierungseinrichtung ihren Fahrern an.

Der Fahrer von Fahrzeug 4 erkennt anhand der Fahrzeugidentifikationsinformation Fahrzeug 2 als Leitfahrzeug und entschließt sich, sein Fahrzeug 4 autonom nachführen zu lassen, da die in der Leitbotschaft enthaltene Routeninformation für einen großen Streckenabschnitt mit seiner eigenen Routenplanung übereinstimmt. Er iniiert entsprechend das Senden einer Folgebotschaft, um den Fahrer von Fahrzeug 2 darüber zu informieren, dass er Fahrzeug 2 autonom nachfolgen möchte. Die Folgebotschaft umfasst ihrerseits eine Fahrzeugidentifikationsinformation in Form einer Fahrzeugbeschreibung (Marke, Typ, Farbe und Ortsangabe), welche nun dem Fahrer von Fahrzeug 2 visuell angezeigt wird. Nach dem Empfang der Folgebotschaft beginnt Leitfahrzeug 2 mit dem Senden von ersten Koordinationsinformationen mittels WLAN. Gleichzeitig erfasst ein in Fahrzeug 4 vorhandener Radarsensor zweite Koordinationsinformationen. Sobald der Fahrer von Fahrzeug 4 Fahrzeug 4 hinter Leitfahrzeug 2 positioniert hat, wird Fahrzeug 4 autonom nachgeführt.

Auch Fahrzeug 3 empfängt die Leitbotschaft von Fahrzeug 2 und der Fahrer von Fahrzeug 3 entschließt sich ebenfalls, Fahrzeug 2 autonom nachgeführt zu werden, obwohl seine eigene Routenplanung bereits nach wenigen Kilometern von der Routenplanung von Leitfahrzeug 2 abweicht. Der Fahrer von Fahrzeug 3 erhofft sich durch das autonome Nachführen auch über nur eine kurze Strecke dennoch eine Entlastung vom Verkehrsgeschehen. Er initiiert das Senden einer Folgebotschaft von Fahrzeug 3 an Fahrzeug 2. Fahrzeug 3 beginnt daraufhin, mittels eines Lidarsensors zweite Koordinationsinformationen zu erfassen. Fahrzeug 2 zeigt dem Fahrer visualisiert die Fahrzeugidentifikationsinformation von Fahrzeug 3 an. Der Fahrer von Fahrzeug 2 ist somit darüber informiert, dass ihm Fahrzeuge 4 und 3 autonom nachzufolgen beabsichtigen.

Fahrzeug 5 empfängt ebenfalls die Leitbotschaft von Fahrzeug 2 und zeigt diese dem Fahrer von Fahrzeug 5 an. Da der Fahrer von Fahrzeug 5 jedoch in Eile ist, entscheidet er, die Leitbotschaft abzulehnen und Fahrzeug 5 nicht autonom nachführen zu lassen, obwohl die Routenplanung von Fahrzeug 2 zu großen Teilen mit seiner eigenen Routenplanung übereinstimmt. Der Fahrer von Fahrzeug 5 geht dabei von der Überlegung aus, dass er mittels eines sportlicheren und dynamischeren Fahrstils als er einem Fahrzeugverband möglich ist, sein Ziel schneller erreichen wird. Die Ablehnung geschieht, indem Fahrzeug 5 die Leitbotschaft nicht mit einer Folgebotschaft beantwortet sondern stattdessen ignoriert.

Auch Fahrzeug 6 empfängt die Leitbotschaft von Fahrzeug 2. Da der Fahrer von Fahrzeug 6 jedoch aufgrund einer von Fahrzeug 2 abweichenden Routenplanung kein Interesse hat, Fahrzeug 2 autonom nachgeführt zu werden, initiiert er nicht das Senden einer Folgebotschaft und lässt die Leitbotschaft unbeantwortet.

In Fig. 1b hat der Fahrer von Fahrzeug 4 Fahrzeug 4 hinter Leitfahrzeug 2 positioniert und Fahrzeug 4 folgt Leitfahrzeug 2 autonom nach. Die Übernahme der Kontrolle durch das erfindungsgemäße Verfahren wird dem Fahrer von Fahrzeug 4 angezeigt. Fahrzeug 4 beginnt mit dem Abgleich der ersten, über WLAN empfangenen Koordinationsinformationen mit den zweiten, über den Radarsensor erfassten Koordinationsinformationen. Die ersten und die zweiten Koordinationsinformationen beschreiben jeweils das Fahrverhalten von Fahrzeug 2. Solange auf Übereinstimmung zwischen den ersten und zweiten Koordinationsinformationen erkannt wird, folgt Fahrzeug 4 Fahrzeug 2 autonom nach. Da Fahrzeug 2 über einen rückwärtigen Radarsensor verfügt und Fahrzeug 4 über einen nach vorne gerichteten Radarsensor verfügt, werden die ersten Koordinationsinformationen von Leitfahrzeug 2 an Folgefahrzeug 4 nicht ausschließlich mittels einer WLAN-Verbindung übertragen, sondern zusätzlich mittels der Radarsensoren, indem den Radarsignalen ein Kommunikationssignal aufmoduliert wird, welches ebenfalls die ersten Koordinationsinformationen überträgt. Somit werden die ersten Koordinationsinformationen redundant zwischen Leitfahrzeug 2 und Folgefahrzeug 4 übertragen. Fahrzeug 3 empfängt die ersten Koordinationsinformationen ebenfalls unmittelbar von Leitfahrzeug 2. Die zweiten Koordinationsinformationen hingegen werden auf Basis der Fahrbewegungen von Fahrzeug 4 mittels eines Lidarsensors erfasst. Der von Fahrzeug 3 vorgenommene Abgleich der ersten und zweiten Koordinationsinformationen beruht somit auf einem Abgleich des sensorisch gemessenen Fahrverhaltens von Fahrzeug 4 mit dem von Fahrzeug 2 übertragenen Fahrverhalten. Zusätzlich erfasst Fahrzeug 3 mittels einer Stereokamera Verkehrshinweise als dritte Koordinationsinformationen in Form von Fahrbahnmarkierungen, Verkehrsschildern und Ampeln sowie vierte Koordinationsinformationen auf Basis von digitalem Kartenmaterial. Das digitale Kartenmaterial umfasst Informationen über Straßenverläufe, Zonen mit beschränkter zulässiger Maximalgeschwindigkeit sowie Angaben über Verkehrsschilder. Solange keine Abweichung der unterschiedlichen, in Fahrzeug 3 vorliegenden Koordinationsinformationen festgestellt wird, wird Fahrzeug 3 Fahrzeug 2 autonom nachgeführt. Fahrzeug 5, welches sich dem Fahrzeugverband bestehend aus Fahrzeugen 2, 3 und 4 nicht angeschlossen hat, setzt zu einem Überholmanöver an und Fahrzeug 6 folgt dem Fahrzeugverband in einigem Abstand.

Um sicherzustellen, dass die Fahrer von Fahrzeugen 3 und 4 sich bereithalten, in einer ggf. auftretenden sicherheitskritischen Situation möglichst schnell wieder die Kontrolle übernehmen zu können, müssen beide Fahrer in unregelmäßigen zeitlichen Abständen jeweils auf eine optische Aufforderung hin einen Taster betätigen. Sofern die Betätigung des Tasters nicht innerhalb von 2 s Sekunden nach Aufforderung erfolgt, wird das autonome Nachführen aus Sicherheitsgründen beendet, da davon ausgegangen wird, dass der Fahrer zu sehr abgelenkt ist bzw. zu unaufmerksam ist, als dass das autonome Nachführen sicher fortgesetzt werden könnte. In diesem Fall wird der Fahrer akustisch darauf aufmerksam gemacht, dass die Kontrolle an ihn zurückgegeben wird, sobald er seine Bereitschaft dazu signalisiert. Die Signalisierung der Bereitschaft seitens des Fahrers erfolgt beispielsgemäß über einen hierfür vorgesehenen Taster oder mittels Betätigung eines Fahrzeugsteuermittels wie z.B. des Lenkrads oder eines Pedals. Unterbleibt die Signalisierung der Bereitschaft zur Kontrollübernahme durch den Fahrer innerhalb einer Zeitspanne von 10 s, so wird automatisch die Warnblinkanlage des Fahrzeugs aktiviert und das Fahrzeug wird autonom an den rechten Fahrbahnrand gesteuert und dort angehalten.

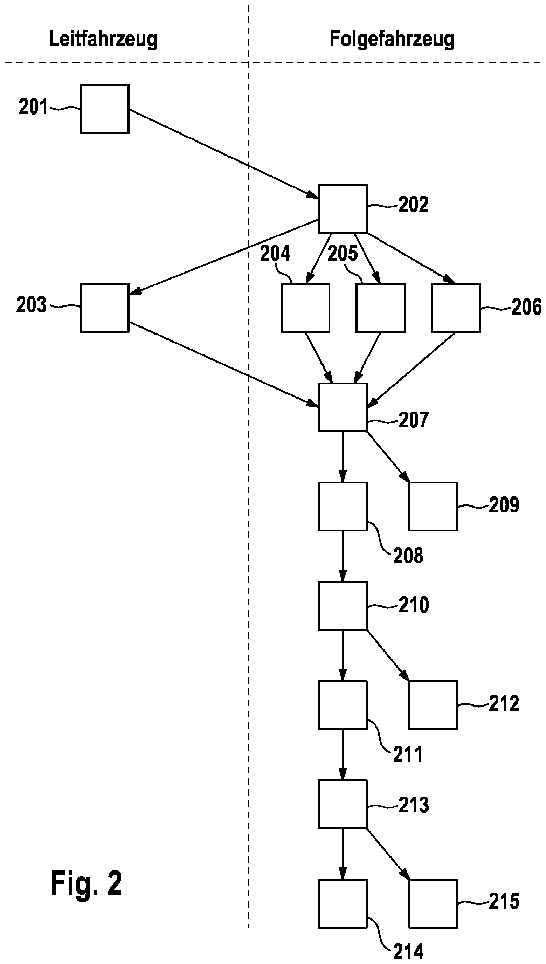

Fig. 2 zeigt ein Flussdiagramm mit einem beispielhaften Ablauf des erfindungsgemäßen Verfahrens. In Schritt 201 sendet ein Leitfahrzeug eine Leitbotschaft, welche in Schritt 202 von einem Folgefahrzeug mit einer Folgebotschaft beantwortet wird. Dies wiederum bewirkt in Verfahrensschritt 203 das Senden von ersten Koordinationsinformationen vom Leitfahrzeug an das Folgefahrzeug. Gleichzeitig beginnt das Folgefahrzeug in Schritt 204 mit dem Erfassen von zweiten Koordinationsinformationen mittels Umfeldsensoren, mit dem Erfassen von dritten Koordinationsinformationen mittels eines geeigneten Kamerasensors in Schritt 205 und mit dem Auslesen von vierten Koordinationsinformationen aus einem digitalen Kartenspeicher in Schritt 206. Im folgenden Verfahrensschritt 207 wird ein Abgleich der ersten, zweiten, dritten und vierten Koordinationsinformationen im Folgefahrzeug durchgeführt. Sofern der Abgleich aller Koordinationsinformationen zu einem übereinstimmenden Abgleichsergebnis führt, wird das Folgefahrzeug in Schritt 208 dem Leitfahrzeug autonom nachgeführt. Andernfalls erfolgt kein autonomes Nachführen bzw. ein Abbruch des autonomen Nachführens in Schritt 209. Falls das Folgefahrzeug in Schritt 208 autonom nachgeführt wird, erfolgt in Schritt 210 eine regelmäßige Aufforderung an den Fahrer, eine manuelle Eingabe zu tätigen, um dem System anzuzeigen, dass er ausreichend aufmerksam ist, um die Fahrzeugkontrolle ggf. kurzfristig übernehmen zu können, sofern dies erforderlich wird. Sofern die Eingabe innerhalb einer Zeitspanne von 3 s nach einer Aufforderung erfolgt, wird das autonome Nachführen in Schritt 211 fortgesetzt, andernfalls wird das autonome Nachführen in Schritt 212 beendet. In Verfahrensschritt 213 erfolgt zudem eine kontinuierliche Sitzplatzbelegungserkennung, mittels derer überprüft wird, ob sich der Fahrer auf dem Fahrersitz befindet. Falls der Fahrer den Fahrersitz während der Fahrt verlässt, wird das autonome Nachführen in Schritt 215 beendet. Sofern der Fahrer den Fahrersitz nicht verlässt, wird das autonome Nachführen in Verfahrensschritt 214 fortgesetzt.

## Patentansprüche

1. Verfahren zum autonomen Nachführen eines Folgefahrzeugs (3, 4) auf der Spur eines Leitfahrzeugs (2),
- bei welchem das Leitfahrzeug (2) von einem Fahrer gesteuert wird,
- wobei vom Leitfahrzeug mittels Fahrzeug-zu-X-Kommunikation eine Leitbotschaft gesendet wird, welche die Bereitschaft zum autonomen Nachführen von Folgefahrzeugen (3, 4) signalisiert und mindestens eine Fahrzeugidentifikationsinformation und eine Routeninformation des Leitfahrzeugs (2) umfasst,
- wobei die Leitbotschaft vom Folgefahrzeug (3, 4) mittels Fahrzeug-zu-X-Kommunikation empfangen wird und von diesem abgelehnt oder mit einer Folgebotschaft, welche zumindest eine Fahrzeugidentifikationsinformation des Folgefahrzeugs (3, 4) umfasst, bestätigt wird und
- wobei vom Leitfahrzeug (2) nach einem Empfang der Folgebotschaft bis zu einem Ende des autonomen Nachführens mittels Fahrzeug-zu-X-Kommunikation erste Koordinationsinformationen zur Koordination des autonomen Nachführens an das Folgefahrzeug (3, 4) gesendet werden,
**dadurch gekennzeichnet,**
- **dass** zweite Koordinationsinformationen zur Koordination des autonomen Nachführens mittels Umfeldsensoren des Folgefahrzeugs (3, 4) auf Basis von Fahrbewegungen des Leitfahrzeugs (2) erfasst werden,
- wobei die ersten und die zweiten Koordinationsinformationen vom Folgefahrzeug (3, 4) abgeglichen werden,
- wobei bei übereinstimmendem Abgleichsergebnis das den ersten und zweiten Koordinationsinformationen entsprechende autonome Nachführen ausgeführt wird und
- wobei bei abweichendem Abgleichsergebnis das autonome Nachführen beendet wird.

2. Verfahren nach Anspruch 1,
**dadurch gekennzeichnet,**
**dass** die Fahrzeug-zu-X-Kommunikation zwischen dem Leitfahrzeug (2) und dem Folgefahrzeug (3, 4) während des autonomen Nachführens über mindestens zwei unterschiedliche Kommunikationsmittel redundant erfolgt.

3. Verfahren nach mindestens einem der Ansprüche 1 und 2,
**dadurch gekennzeichnet,**
- **dass** mittels der Umfeldsensoren des Folgefahrzeugs (3, 4) dritte Koordinationsinformationen auf Basis von Verkehrshinweisen und/oder vierte Koordinationsinformationen auf Basis von digitalem Kartenmaterial erfasst werden,
- wobei die dritten und/oder vierten Koordinationsinformationen mit den ersten und den zweiten Koordinationsinformationen abgeglichen werden,
- wobei bei übereinstimmendem Abgleichsergebnis das den ersten und zweiten und dritten und/oder vierten Koordinationsinformationen entsprechende autonome Nachführen ausgeführt wird und
- wobei bei abweichendem Abgleichsergebnis das autonome Nachführen beendet wird.

4. Verfahren nach mindestens einem der Ansprüche 1 bis 3,
**dadurch gekennzeichnet,**
**dass** die ersten Koordinationsinformationen absolute Positionsinformationen und absolute Geschwindigkeitsinformationen und absolute Lenkwinkelinformationen und absolute Ausrichtungsinformationen des Leitfahrzeugs umfassen und die zweiten Koordinationsinformationen relative Positionsinformationen und relative Geschwindigkeitsinformationen und relative Ausrichtungsinformationen des Leitfahrzeugs zum Folgefahrzeug umfassen.

5. Verfahren nach mindestens einem der Ansprüche 1 bis 4,
**dadurch gekennzeichnet,**
**dass** das autonome Nachführen eine autonome Längs- und eine autonome Querregelung des Folgefahrzeugs (3, 4) gemäß dem übereinstimmenden Abgleichsergebnis der ersten und zweiten und/oder dritten und/oder vierten Koordinationsinformationen umfasst.

6. Verfahren nach mindestens einem der Ansprüche 1 bis 5, **dadurch gekennzeichnet,**
**dass** mehr als nur ein einzelnes Folgefahrzeug (3, 4) autonom nachgeführt wird,
wobei bei einem autonomen Nachführen von mehr als nur einem Folgefahrzeug (3, 4) die zweiten Koordinationsinformationen mittels der Umfeldsensoren des jeweiligen Folgefahrzeugs (3, 4) auf Basis der Fahrbewegung eines dem jeweiligen Folgefahrzeug (3, 4) vorausfahrenden Fahrzeugs (4) erfasst werden.

7. Verfahren nach mindestens einem der Ansprüche 1 bis 6,
**dadurch gekennzeichnet,**
**dass** ein Fahrer des Folgefahrzeugs (3, 4) während des autonomen Nachführens vom Folgefahrzeug (3, 4) zur Vornahme einer manuellen Eingabe aufgefordert wird,
wobei das autonome Nachführen beendet wird, wenn die manuelle Eingabe ausbleibt.

8. Verfahren nach mindestens einem der Ansprüche 1 bis 7,
**dadurch gekennzeichnet,**
**dass** eine zeitliche Dauer des autonomen Nachführens auf einen vorgegebenen Anteil eines vorgegebenen Zeitintervalls, insbesondere auf 50 Minuten je Stunde, begrenzt wird.

9. Verfahren nach mindestens einem der Ansprüche 1 bis 8,
**dadurch gekennzeichnet,**
**dass** vom Folgefahrzeug (3, 4) mittels einer Sitzplatzbelegungserkennung überwacht wird, ob sich der Fahrer auf dem Fahrersitz befindet,
wobei das autonome Nachführen beendet wird, wenn der Fahrer sich nicht auf dem Fahrersitz befindet.

10. Verfahren nach mindestens einem der Ansprüche 1 bis 9,
**dadurch gekennzeichnet,**
**dass** mittels der gesendeten Fahrzeugidentifikationsinformation des Folgefahrzeugs eine folgefahrzeugspezifische und strecken- und/oder zeitabhängige Information zur Vergütung des Fahrers des Leitfahrzeugs erstellt wird.

11. Verfahren nach einem der vorstehenden Ansprüche, wobei
- das Leitfahrzeug (2) Umfeldsensoren mit einem Radarsensor umfasst, und wobei
- Radarsignalen des Radarsensors ein Kommunikationssignal aufmoduliert wird, welches ebenfalls die ersten Koordinationsinformationen überträgt.

12. System zum autonomen Nachführen eines Folgefahrzeugs (3, 4) auf der Spur eines Leitfahrzeugs (2),
insbesondere zur Ausführung eines Verfahrens nach mindestens einem der Ansprüche 1 bis 9,
umfassend zumindest ein von einem Fahrer gesteuertes LeitFahrzeug (2), ein Folgefahrzeug (3, 4), Fahrzeug-zu-X-Kommunikationsmittel im Leitfahrzeug (2) und im Folgefahrzeug (3, 4) zum Senden und Empfangen von Botschaften und Informationen, Fahrbewegungssensoren im Leitfahrzeug (2) zum Bereitstellen von ersten Koordinationsinformationen, Koordinationsinformationsabgleichsmittel im Folgefahrzeug (3, 4) zum Abgleich unterschiedlicher Koordinationsinformationen sowie Umfeldsensoren im Folgefahrzeug (3, 4) und/oder einen eine digitale Karte enthaltenden Kartenspeicher im Folgefahrzeug (3, 4),
wobei das Leitfahrzeug (2) eine Leitbotschaft sendet, welche die Bereitschaft zum autonomen Nachführen von Folgefahrzeugen (3, 4) signalisiert und mindestens eine Fahrzeugidentifikationsinformation und eine Routeninformation des Leitfahrzeugs (2) umfasst,
wobei das Folgefahrzeug (3, 4) die Leitbotschaft empfängt und diese ablehnt oder mit einer Folgebotschaft, welche zumindest eine Fahrzeugidentifikationsinformation des Folgefahrzeugs (3, 4) umfasst, bestätigt und
wobei das Leitfahrzeug (2) nach einem Empfang der Folgebotschaft (3, 4) bis zu einem Ende des autonomen Nachführens die ersten Koordinationsinformationen zur Koordination des autonomen Nachführens an das Folgefahrzeug (3, 4) sendet,
**dadurch gekennzeichnet,**
**dass** die Umfeldsensoren des Folgefahrzeugs (3, 4) zweite Koordinationsinformationen zur Koordination des autonomen Nachführens auf Basis von Fahrbewegungen des Leitfahrzeugs (2) erfassen,
wobei die Koordinationsinformationsabgleichsmittel die ersten und die zweiten Koordinationsinformationen abgleichen,
wobei das Folgefahrzeug (3, 4) bei übereinstimmendem Abgleichsergebnis das den ersten und zweiten Koordinationsinformationen entsprechende autonome Nachführen ausführt und
wobei das Folgefahrzeug (3, 4) bei abweichendem Abgleichsergebnis das autonome Nachführen beendet.

13. System nach Anspruch 12,
**dadurch gekennzeichnet,**
**dass** die Umfeldsensoren ein oder mehrere Elemente aus der Gruppe
- Radarsensor,
- optischer Kamerasensor,
- Lidarsensor,
- Lasersensor und
- Ultraschallsensor
sind und
die Fahrzeug-zu-X-Kommunikationsmittel auf Basis einer oder mehrerer Verbindungsklassen aus der Gruppe
- WLAN-Verbindung, insbesondere nach IEEE 802.11,
- ISM-Verbindung (Industrial, Scientific, Medical Band),
- Bluetooth®-Verbindung,
- ZigBee-Verbindung,
- UWB-Verbindung (Ultra Wide Band),
- WiMax®-Verbindung (Worldwide Interoperability for Microwave Access),
- Infrarotverbindung,
- Mobilfunkverbindung und
- radarbasierter Kommunikation
Botschaften und/oder Informationen senden und/oder empfangen.

## Claims

1. A method for autonomous tracking of a following vehicle (3, 4) on the track of a leading vehicle (2),
- in which the leading vehicle (2) is controlled by an operator,
- wherein a lead message is sent from the leading vehicle by means of vehicle-to-X communication which signals the readiness for autonomous tracking of following vehicles (3, 4) and comprises at least one element of vehicle identification information and route information of the leading vehicle (2),
- wherein the lead message is received by the following vehicle (3, 4) by means of vehicle-to-X communication and is rejected by the following vehicle or confirmed with a follow message which comprises at least one element of vehicle identification information of the following vehicle (3, 4), and
- wherein, after receipt of the follow message, a first element of coordination information for coordination of the autonomous tracking is sent to the following vehicle (3, 4) by the leading vehicle (2) by means of vehicle-to-X communication until an end of the autonomous tracking,
**characterized in that**
- a second element of coordination information is detected for coordination of the autonomous tracking by means of environment sensors of the following vehicle (3, 4) on the basis of movements of the leading vehicle (2),
- wherein the first and the second elements of coordination information are compared by the following vehicle (3, 4),
- wherein, in the case of a matching comparison result, the autonomous tracking is performed corresponding to the first and second elements of coordination information, and
- wherein, in the case of a deviating comparison result, the autonomous tracking is ended.

2. The method according to Claim 1,
**characterized in that**
the vehicle-to-X communication between the leading vehicle (2) and the following vehicle (3, 4) takes place redundantly by means of at least two different means of communication during the autonomous tracking.

3. The method according to at least one of Claims 1 and 2,
**characterized in that**
- third elements of coordination information on the basis of traffic forecasts and/or fourth elements of coordination information on the basis of digital map material are detected by means of the environment sensors of the following vehicle (3, 4),
- wherein the third and/or fourth elements of coordination information are compared with the first and the second elements of coordination information,
- wherein, in the case of a matching comparison result, the autonomous tracking corresponding to the first and second and third and/or fourth elements of coordination information is performed, and
- wherein, in the case of a deviating comparison result, the autonomous tracking is ended.

4. The method according to at least one of Claims 1 to 3,
**characterized in that**
the first elements of coordination information comprise absolute elements of position information and absolute elements of speed information and absolute elements of steering angle information and absolute elements of alignment information of the leading vehicle, and the second elements of coordination information comprise relative elements of position information and relative elements of speed information and relative elements of alignment information of the leading vehicle with respect to the following vehicle.

5. The method according to at least one of Claims 1 to 4,
**characterized in that**
the autonomous tracking comprises an autonomous longitudinal and an autonomous transverse control of the following vehicle (3, 4) according to the matching comparison result of the first and second and/or third and/or fourth elements of coordination information.

6. The method according to at least one of Claims 1 to 5,
**characterized in that**
more than just one individual following vehicle (3, 4) is autonomously tracked,
wherein during an autonomous tracking of more than just one following vehicle (3, 4), the second elements of coordination information are detected by means of the environment sensors of the respective following vehicle (3, 4) on the basis of the movement of a vehicle (4) driving ahead of the respective following vehicle (3, 4).

7. The method according to at least one of Claims 1 to 6,
**characterized in that**
an operator of the following vehicle (3, 4) is prompted during the autonomous tracking by the following vehicle (3, 4) to perform a manual input, wherein the autonomous tracking is ended if the manual input fails to materialize.

8. The method according to at least one of Claims 1 to 7,
**characterized in that**
a time duration of the autonomous tracking is limited to a predefined proportion of a predefined time interval, in particular to 50 minutes per hour.

9. The method according to at least one of Claims 1 to 8,
**characterized in that**
the following vehicle (3, 4) monitors whether the operator is located on the operator's seat by means of seat occupation recognition,
wherein the autonomous tracking is ended if the operator is not located on the operator's seat.

10. The method according to at least one of Claims 1 to 9,
**characterized in that**
information which is specific to the following vehicle and distance-dependent and/or time-dependent is compiled by means of the vehicle identification information sent by the following vehicle in order to pay the operator of the leading vehicle.

11. The method according to any one of the preceding claims, wherein
- the leading vehicle (2) comprises environment sensors having a radar sensor, and wherein
a communication signal, which likewise transfers the first elements of coordination information, is modulated onto radar signals of the radar sensor.

12. A system for autonomous tracking of a following vehicle (3, 4) on the track of a leading vehicle (2),
in particular for executing a method according to at least one of Claims 1 to 9,
comprising at least one leading vehicle (2) controlled by an operator, a following vehicle (3, 4), vehicle-to-X communication means in the leading vehicle (2) and in the following vehicle (3, 4) for sending and receiving messages and information, movement sensors in the leading vehicle (2) for providing first elements of coordination information, coordination information comparison means in the following vehicle (3, 4) for comparing different coordination information as well as environment sensors in the following vehicle (3, 4) and/or a map store containing a digital map in the following vehicle (3, 4),
wherein the leading vehicle (2) sends a lead message which signals the readiness for autonomous tracking of following vehicles (3, 4) and comprises at least one element of vehicle identification information and route information of the leading vehicle (2),
wherein the following vehicle (3, 4) receives the lead message and rejects said message or confirms said message with a follow message which comprises at least one element of vehicle identification information of the following vehicle (3, 4), and
wherein the leading vehicle (2), after receipt of the follow message, sends the first elements of coordination information for coordination of the autonomous tracking to the following vehicle (3, 4) until an end of the autonomous tracking,
**characterized in that**
the environment sensors of the following vehicle (3, 4) detect second elements of coordination information for coordination of the autonomous tracking on the basis of movements of the leading vehicle (2),
wherein the coordination information comparison means compares the first and the second elements of coordination information,
wherein, in the case of a matching comparison result, the following vehicle (3, 4) performs the autonomous tracking corresponding to the first and second elements of coordination information, and
wherein, in the case of a deviating comparison result, the following vehicle (3, 4) ends the autonomous tracking.

13. The system according to Claim 12,
**characterized in that**
the environment sensors are one or more elements selected from the group consisting of:
- a radar sensor,
- an optical camera sensor,
- a lidar sensor,
- a laser sensor and
- an ultrasonic sensor
and
the vehicle-to-X communications means sends and/or receives messages and/or information on the basis of one or more connection classes selected from the group consisting of:
- a WLAN connection, in particular in accordance with IEEE 802.11,
- an ISM (Industrial, Scientific, Medical Band) connection,
- a Bluetooth® connection,
- a ZigBee connection,
- a UWB (Ultra-Wide Band) connection,
- a WiMax® (Worldwide Interoperability for Microwave Access) connection,
- an infrared connection,
- a mobile radio connection, and
- radar-based communication.

## Revendications

1. Procédé pour le suivi autonome d'un véhicule suiveur (3, 4) sur la voie d'un véhicule guide (2),
- sur lequel le véhicule guide (2) est piloté par un conducteur,
- un message de guidage étant envoyé du véhicule guide au moyen de la communication véhicule à x lequel message signale la disponibilité pour le suivi autonome de véhicules suiveurs (3, 4) et comprend au moins une information d'identification de véhicule et une information d'itinéraire du véhicule guide (2),
- le message de guidage du véhicule suiveur (3, 4) étant reçu au moyen de la communication véhicule à x et étant rejeté par celui-ci ou confirmé par un message de suivi, lequel comprend au moins une information d'identification de véhicule du véhicule suiveur (3, 4), et
- des premières informations de coordination pour la coordination du suivi autonome étant envoyées au moyen de la communication véhicule à x au véhicule suiveur (3, 4) par le véhicule guide (2), après une réception du message de suivi, jusqu'à une fin du suivi autonome,
**caractérisé en ce que**
- des deuxièmes informations de coordination sont enregistrées au moyen de capteurs d'environnement du véhicule suiveur (3, 4) sur la base de déplacements du véhicule guide (2), pour la coordination du suivi autonome,
- les premières et deuxièmes informations de coordination étant comparées par le véhicule suiveur (3, 4),
- le suivi autonome correspondant aux premières et deuxièmes informations de coordination étant exécuté en cas de concordance des résultats de comparaison, et
- le suivi autonome étant arrêté en cas de non concordance des résultats de comparaison.

2. Procédé selon la revendication 1,
**caractérisé en ce que**
la communication véhicule à x entre le véhicule guide (2) et le véhicule suiveur (3, 4) est effectuée de façon redondante par au moins deux moyens de communication différents pendant le suivi autonome.

3. Procédé selon au moins l'une des revendications 1 et 2,
**caractérisé en ce que**
- des troisièmes informations de coordination sont enregistrées sur la base d'indications de circulation et/ou des quatrièmes informations de coordination sont enregistrées sur la base de données cartographiques numériques, au moyen de capteurs d'environnement du véhicule suiveur (3, 4),
- les troisièmes et/ou quatrièmes informations de coordination étant comparées avec les premières et les deuxièmes informations de coordination.
- le suivi autonome correspondant aux premières et deuxièmes et troisièmes et/ou quatrièmes informations de coordination étant exécuté en cas de concordance des résultats de comparaison, et
- le suivi autonome étant arrêté en cas de non concordance des résultats de comparaison.

4. Procédé selon au moins l'une des revendications 1 à 3,
**caractérisé en ce que**
les premières informations de coordination comprennent des informations de position absolues et des informations de vitesse absolues et des informations d'angle de braquage absolues et des informations d'orientation absolues du véhicule guide, et **en ce que** les deuxièmes informations de coordination comprennent des informations de position relatives et des informations de vitesse relatives et des informations d'orientation relatives du véhicule guide par rapport au véhicule suiveur.

5. Procédé selon au moins l'une des revendications 1 à 4,
**caractérisé en ce que**
le suivi autonome comprend une commande longitudinale autonome et une commande latérale autonome du véhicule suiveur (3, 4), conformément aux résultats de comparaison concordants des premières et des deuxièmes et/ou des troisièmes et/ou des quatrièmes informations de coordination.

6. Procédé selon au moins l'une des revendications 1 à 5,
**caractérisé en ce que**
plus d'un véhicule suiveur (3, 4) unique est guidé de façon autonome,
les deuxièmes informations de coordination étant enregistrées au moyen des capteurs d'environnement du véhicule suiveur (3, 4) respectif, sur la base du déplacement d'un véhicule précédant le véhicule suiveur (3, 4) respectif, lors d'un suivi autonome de plus d'un véhicule suiveur (3, 4).

7. Procédé selon au moins l'une des revendications 1 à 6,
**caractérisé en ce qu'**
il est demandé à un conducteur du véhicule suiveur (3, 4) d'effectuer une entrée manuelle pendant le suivi autonome du véhicule suiveur (3, 4),
le suivi autonome étant arrêté lorsque l'entrée manuelle n'est pas effectuée.

8. Procédé selon au moins l'une des revendications 1 à 7,
**caractérisé en ce qu'**
une durée temporelle du suivi autonome est limitée à une proportion spécifiée d'un intervalle temporel spécifié, en particulier à 50 minutes par heure.

9. Procédé selon au moins l'une des revendications 1 à 8,
**caractérisé en ce que**
le fait de savoir si le conducteur se trouve sur le siège du conducteur est surveillé à l'aide d'une reconnaissance d'occupation de siège à partir du véhicule suiveur (3, 4),
le suivi autonome étant arrêté lorsque le conducteur ne se trouve pas sur le siège du conducteur.

10. Procédé selon au moins l'une des revendications 1 à 9,
**caractérisé en ce qu'**
une information spécifique au véhicule suiveur et dépendant du trajet et/ou du temps est générée pour la rémunération du conducteur du véhicule guide, au moyen d'informations d'identification de véhicule envoyées par le véhicule suiveur.

11. Procédé selon l'une quelconque des revendications précédentes,
- le véhicule guide (2) comprenant des capteurs d'environnement avec un capteur radar, et
- un signal de communication étant modulé sur les signaux radar du capteur radar, lequel signal transmet également les premières informations de coordination.

12. Système pour le suivi autonome d'un véhicule suiveur (3, 4) sur la voie d'un véhicule guide (2),
en particulier pour l'exécution d'un procédé selon au moins l'une quelconque des revendications 1 à 9,
comprenant au moins un véhicule guide (2) piloté par un conducteur, un véhicule suiveur (3, 4), des moyens de communication véhicule à x dans le véhicule guide (2) et dans le véhicule suiveur (3, 4) pour l'émission et la réception de messages et d'informations, des capteurs de déplacement dans le véhicule guide (2) pour la mise à disposition de premières informations de coordination, des moyens de comparaison d'informations de coordination dans le véhicule suiveur (3, 4) pour la comparaison d'informations de coordination différentes, ainsi que des capteurs d'environnement dans le véhicule suiveur (3, 4) et/ou une mémoire cartographique contenant une carte numérique dans le véhicule suiveur (3, 4),
le véhicule guide (2) envoyant un message de guidage, lequel signale la disponibilité pour le suivi autonome de véhicules suiveurs (3, 4) et comprend au moins une information d'identification de véhicule et une information d'itinéraire du véhicule guide (2),
le véhicule suiveur (3, 4) recevant le message de guidage et rejetant celui-ci ou le confirmant par un message de suivi, lequel comprend au moins une information d'identification de véhicule du véhicule suiveur (3, 4), et
le véhicule guide (2) envoyant les premières informations de coordination pour la coordination du suivi autonome au véhicule suiveur (3, 4), après une réception du message de suivi (3, 4) jusqu'à une fin du suivi autonome,
**caractérisé en ce que**
les capteurs d'environnement du véhicule suiveur (3, 4) enregistrent des deuxièmes informations de coordination pour la coordination du suivi autonome, sur la base de déplacements du véhicule guide (2),
les moyens de comparaison d'informations de coordination comparant les premières et les deuxièmes informations de coordination,
le véhicule suiveur (3, 4) exécutant le suivi autonome correspondant aux premières et deuxièmes informations de coordination, en cas de concordance des résultats de comparaison, et
le véhicule suiveur (3, 4) arrêtant le suivi autonome en cas de non concordance des résultats de comparaison.

13. Système selon la revendication 12,
**caractérisé en ce que**
les capteurs d'environnement sont un ou plusieurs éléments parmi le groupe
- capteur radar,
- capteur de caméra optique,
- capteur lidar,
- capteur laser et
- capteur à ultrasons
et **en ce que**
les moyens de communication véhicule à x envoient et/ou reçoivent des messages et/ou des informations sur la base d'une ou de plusieurs classes de connexion parmi le groupe
- connexion WLAN, en particulier conformément à IEEE 802.11,
- connexion ISM (bandes industrielle, scientifique, médicale),
- connexion Bluetooth,
- connexion ZigBee,
- connexion ULB (bande ultra-large),
- connexion WiMAX® (Worldwide Interoperability for Microwave Access),
- connexion infrarouge,
- connexion par téléphonie mobile et
- communication basée sur radar.
